# EUROPÄISCHE PATENTSCHRIFT

(11) **EP 2 040 877 B1**
(45) Veröffentlichungstag und Bekanntmachung des Hinweises auf die Patenterteilung: **27.04.2016**
(21) Anmeldenummer: 08716498.4
(22) Anmeldetag: 13.03.2008
(51) Int. Cl.: B25J 15/00

(54) **VERBINDUNGSVERFAHREN UND RAHMUNGSEINRICHTUNG**
CONNECTION METHOD AND FRAMING DEVICE
PROCÉDÉ DE LIAISON ET DISPOSITIF D'ENCADREMENT

(30) Priorität: 16.03.2007 DE 202007004183 U
(43) Veröffentlichungstag der Anmeldung: 01.04.2009
(73) Patentinhaber: KUKA Industries GmbH, 86165 Augsburg (DE)
(72) Erfinder: VONTZ, Albert, 86836 Untermeitingen (DE); DOBKOWITZ, Thomas, 86438 Kissing (DE); SCHÄRTL, Elisabeth, 85221 Dachau (DE)
(74) Vertreter: Ernicke, Klaus Stefan
(86) Internationale Anmeldenummer: PCT/EP2008/002000
(87) Internationale Veröffentlichungsnummer: WO 2008/113508

(56) Entgegenhaltungen:
- EP-A- 0 282 468
- EP-A- 1 733 909
- DE-A1- 4 234 674
- DE-A1- 4 306 683
- DE-A1- 10 031 076
- JP-A- 2000 005 934
- JP-A- 2005 111 619
- US-A- 5 795 421

## Beschreibung

Die Erfindung betrifft ein Verbindungsverfahren mit den Merkmalen im Oberbegriff des Verfahrenshauptanspruchs.

Aus der EP 1 733 909 A2 ist es bei der Schiebedachfertigung bekannt, eine Glasscheibe in einen vorbereiteten Schiebedachrahmen mittels eines Roboters einzusetzen. Der Schiebedachrahmen wird dabei extern vorbereitet und hergestellt und steht als fertiges Bauteil an der Roboterstation zum Einsetzen der Scheibe zur Verfügung. Der Schiebedachrahmen ist an einer Seite zum Einlegen der Scheibe offen. Zur Scheibenbefestigung ist lediglich eine Klebeverbindung vorgesehen. Der Robotereinsatz ist auf das Scheibenhandling beschränkt. Der Gesamtaufwand ist durch die externe Rahmenfertigung relativ hoch.

Die EP 0 282 468 A1 befasst sich mit einem manuellen Fügen eines aus mehreren Teilen bestehenden Rahmens an eine gebogene Glasscheibe. Die z.T. ebenfalls gebogenen Rahmenteile werden einzeln an die gewölbte Glasscheibe gesteckt und mit Eckverbindern über stumpfe Eckenstöße fixiert. Die Glasscheibe wird hierzu auf einen gewölbten Tisch mit einer Saugeinrichtung aufgelegt und hiervon in der gewölbten Form gehalten.

Die JP 2005-111 619 A zeigt ein Verfahren zum geordneten Aufstellen von Artikeln, die von einem Roboter aus einer regellosen Lage aufgegriffen auf einem Tisch in einer Reihenanordnung abgestellt werden. Bei den Artikeln handelt es sich um Rohrteile mit einer Fußplatte.

Aus der JP 2000-005 934 A ist eine Drahtzuführvorrichtung für eine Erodiermaschine bekannt.

In der DE 42 34 674 A1 ist eine NC-Werkzeugmaschine mit einem Gelenkroboter bekannt.

Die DE 100 31 076 A1 zeigt ein Fügeverfahren und eine Fügeeinrichtung für Fensterrahmen und Fensterscheiben. Von einem Roboter werden von einem Sauggreifer Scheiben von einem Stapel gegriffen und in einen Fensterrahmen eingelegt, der zuvor in einer Handarbeitsstation manuell hergestellt wird, wobei Fügerahmen und Blendrahmen zur Bildung der Fenstereinheit zusammengesetzt, die Scharniere verbolzt und Tragklötze eingeclipst werden. Der Roboter führt hierbei nur Einlegearbeiten aus. In einer Folgestation wird der Fensterrahmen manuell vervollständigt.

Die US 5,795,421 A befasst sich mit einem Verfahren und einer Vorrichtung zum Anbringen eines flexiblen Kunststoffprofils am Außenrand eines Paneels. Ein Roboter hält mit einem Sauggreifer das Paneel und drückt es in das aus einem Extruder kommende und mittels Schlitzplatten geöffnete Kunststoffprofil, wobei das Paneel mit dem Profilvorschub mitbewegt und gedreht wird, so dass das Profil umlaufend am Paneelrand aufgebracht wird.

Es ist Aufgabe der vorliegenden Erfindung, ein verbessertes Verbindungsverfahren aufzuzeigen.

Die Erfindung löst diese Aufgabe mit den Merkmalen im Verfahrenshauptanspruch.

Die beanspruchte Verbindungs- und Rahmungstechnik hat den Vorteil, dass der Roboter mehrere Funktionen ausführen kann und nicht nur zum Scheibenhandling, sondern auch zum Aufnehmen und Fügen des Rahmens und seiner Rahmenteile verwendet wird. Der Rahmen kann eine im wesentlichen U-förmige Profilform haben und den Scheibenrand formschlüssig umgreifen. Durch die zumindest in Teilen vom Manipulator mitgeführte Fügeeinrichtung kann der Rahmen aus den mehreren Rahmenteilen am scheibenartigen Körper herum aufgebaut werden. Dies vereinfacht und beschleunigt den Einrahmprozess. Der Kosten- und Bauaufwand ist niedrig. Andererseits sind die Wirtschaftlichkeit und die Flexibilität der Rahmungseinrichtung sehr hoch. Günstig sind außerdem die Schnelligkeit des Fügeprozesses und die Möglichkeit für eine Vollautomatisierung.

Die Rahmungstechnik kann für beliebige Arten von scheibenartigen Körpern Verwendung finden. Desgleichen können Art und Größe der Rahmen und deren Rahmenteile beliebig variieren. Dank der Roboterkinematik kann auch die Zahl der Rahmenteile beliebig groß sein. Der Rahmen kann umlaufend geschlossen oder stellenweise offen oder unterbrochen sein.

Beim Einrahmprozess kann eine formschlüssige Verbindung zwischen den Rahmenteilen und dem scheibenartigen Körper geschaffen werden, welche für einen sicheren mehrseitigen Halt des scheibenförmigen Körpers im Rahmen sorgt. Andererseits kann der Verbund der Rahmenteile in geeigneter Weise gesichert werden, z.B. durch Eckverbinder oder dergleichen. Die Gesamtfestigkeit der Rahmen- und Scheibenkonstruktion ist sehr hoch, wobei auch eine hohe Fertigungsgenauigkeit geboten wird.

Mit der beanspruchten Verbindungstechnik und der hierbei eingesetzten Rahmungseinrichtung können unterschiedliche Arten von Fügeprozessen gefahren werden. Z.B. können das Vorfügen und Aufnehmen der Rahmenteile sowie das Fertigfügen und Anpressen der Rahmenteile in einem Vorgang oder in verschiedenen Schritten getrennt nacheinander erfolgen. Der Manipulator, der vorzugsweise als mehrachsiger Gelenkarmroboter ausgebildet ist, kann hierfür die Zustell- und Anpressbewegungen für den ein- oder mehrteiligen Fügeprozess durchführen. Alternativ kann die Fügeeinrichtung aktive Spann- und Presswerkzeuge aufweisen, welche eigenständig für ein Anpressen der Rahmenteile am scheibenförmigen Körper sorgen. Insbesondere können an einem Fügehalter oder Fügetisch Werkzeuge zum Einweisen und Führen sowie zum Anpressen angeordnet sein, die den Fügeprozess unterstützen.

Die Rahmungstechnik bietet außerdem den Vorteil, dass während des Prozess eventuelle Verzüge in den scheibenförmigen Körpern mit einer Planiereinrichtung egalisiert werden können. Durch den anschließend angebauten Rahmen kann die Verzugkompensation dauerhaft erhalten werden.

Die Fügeeinrichtung erlaubt es, den Rahmenbau und das Einfügen der Scheibe miteinander zu verschmelzen und bei dem Prozess die Bauteile Rahmen und Scheibe optimal aufeinander anzupassen. Hierbei können auch etwaige Toleranzen aufgenommen werden. Das Endprodukt der eingerahmten Scheibe hat eine maximale Qualität. Außerdem kann der Handhabungs- und Einrahmprozess unter maximaler Schonung der scheibenförmigen Körper ablaufen. Hierdurch können auch sehr empfindliche scheibenartige Körper, z.B. Solarzellenelemente für die Photovoltaik maschinell verarbeitet werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Rahmungseinrichtung mit Roboter- und Fügeeinrichtung in Seitenansicht,
- Figur 2:: einen Fügetisch in perspektivischer Ansicht,
- Figur 3 bis 5:: ein Fügewerkzeug in perspektivischer Ansicht, Seitenansicht und Draufsicht,
- Figur 6 bis 11:: unterschiedliche Arten von Spannern in verschiedenen Darstellungen,
- Figur 12:: eine Greifeinrichtung des Fügewerkzeugs in perspektivischer Darstellung,
- Figur 13:: ein Gestell des Fügewerkzeugs in perspektivischer Darstellung,
- Figur 14 bis 22:: die Rahmungseinrichtung in verschiedenen Funktionsschritten,
- Figur 23:: eine Variante eines Fügetischs in perspektivischer Ansicht und
- Figur 24 bis 26:: den Fügetisch von Figur 23 in verschiedenen Ansichten.

Die Erfindung betrifft ein Verfahren zum Verbinden von mindestens einem scheibenartigen Körper (6) mit einem Rahmen (5). Hierbei ist es möglich, den Rahmen (5) beim Fügen mit dem scheibenartigen Körper (6) aus mehreren einzelnen Rahmenteilen (8,9,10,11) zusammenzubauen. Insbesondere können beim Fügen der scheibenförmige Körper (6) und der Rahmen (5) formschlüssig derart miteinander verbunden werden, dass ein Lösen nur durch ein Öffnen des Rahmens (5) möglich ist.

Der scheibenförmige Körper (6) kann beliebig ausgebildet sein. Im gezeigten Ausführungsbeispiel handelt es sich um ein plattenförmiges Teil mit einem rechteckigen Querschnitt. Die Querschnittsform kann beliebig anders, z.B. fünfeckig oder mehreckig, kreisrund oder oval oder dgl. gewählt werden. Der scheibenartige Körper (6) kann einfach oder mehrfach vorhanden und mit einem Rahmen (5) gefügt werden. Der scheibenartige Körper (6) kann außer der gezeigten Plattenform auch eine andere Gestalt haben, wobei die Scheiben- oder Plattenform nur bereichsweise vorhanden ist, z.B. an den außenseitigen und gegebenenfalls umlaufenden Rändern (7). Im nachfolgend erläuterten Ausführungsbeispiel wird von einer Scheibe (6) gesprochen. Dies schließt alle anderen Arten von scheibenartigen Körpern ein.

Die Scheibe (6) kann beliebigen Zwecken dienen und eine beliebige Ausbildung haben. Beispielsweise handelt es sich um ein plattenförmiges Solarzellenelement, welches aus ein oder mehreren Glasplatten, ein oder mehreren Photoelementen und ein oder mehreren weiteren Deckschichten sowie einer Leitungs- und Schaltanordnung bestehen kann. Alternativ kann die Scheibe (6) eine Verbundglasscheibe, eine Isolierglasscheibe oder ein sonstiges plattenartiges Element sein.

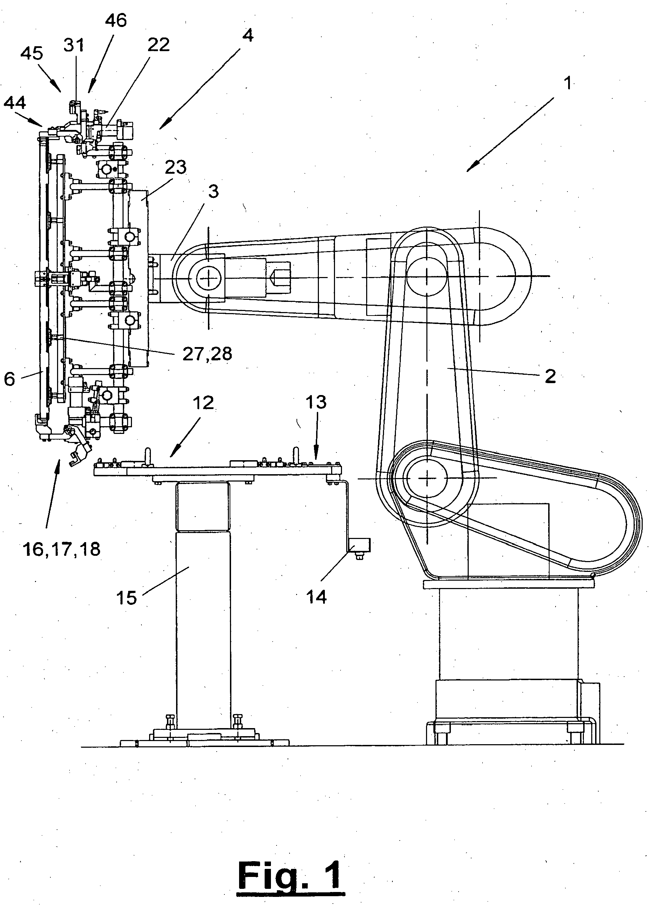

Die in Figur 1 schematisch dargestellte Rahmungseinrichtung (1) weist mindestens einen Manipulator (2) und eine diesem zugeordnete Fügeeinrichtung (4) zum Fügen der einzelnen Rahmenteile (8,9,10,11) am scheibenartigen Körper (6) auf. Die Fügeeinrichtung (4) kann komplett oder in Teilen vom Manipulator (2) gehalten und geführt werden.

Die Fügeeinrichtung (4) kann eine Vorfügeeinrichtung (16) und/oder eine Presseinrichtung (17) zum Verbinden und Anpressen der Rahmenteile (8,9,10,11) am scheibenartigen Körper (6) besitzen. Hierfür gibt es verschiedene nachfolgend erläuterte Varianten. Ferner kann die Fügeeinrichtung (4) eine Planiereinrichtung (18) zur Beseitigung von Verzügen im scheibenartigen Körper (6) aufweisen. Zur Fügeeinrichtung (4) kann außerdem eine Einrichtung (14) zur Prozessvorbereitung der Scheiben (6) gehören.

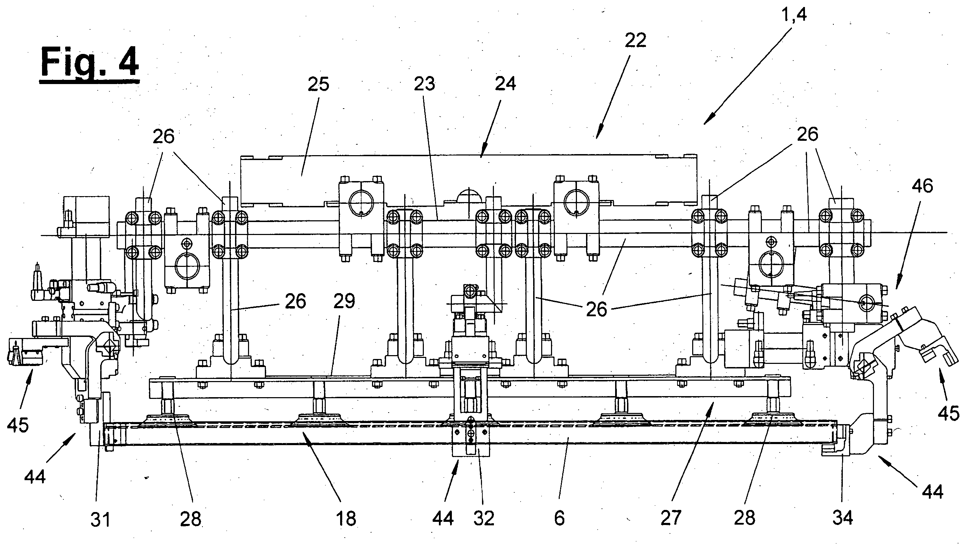

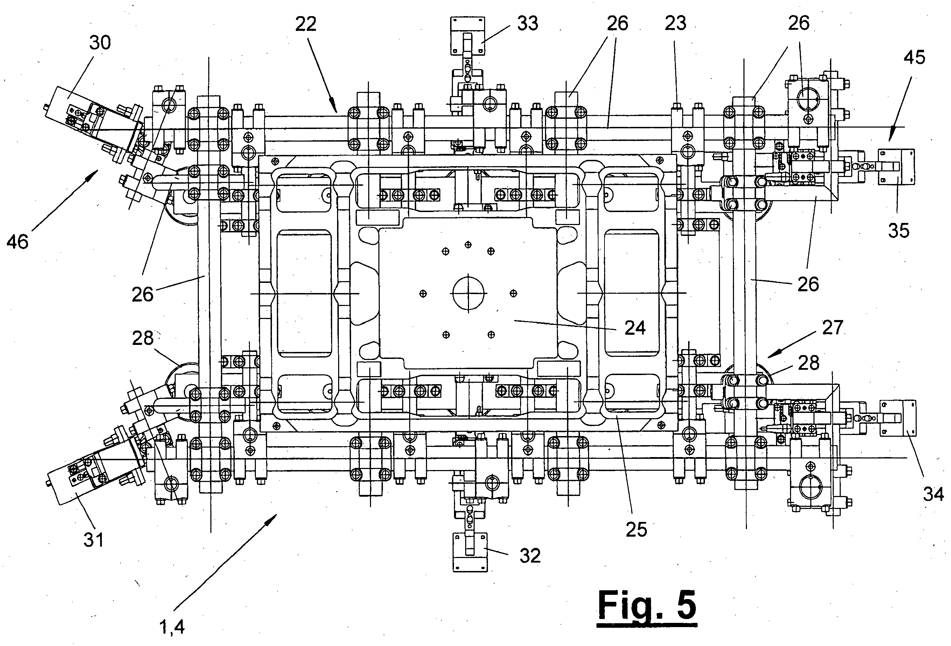

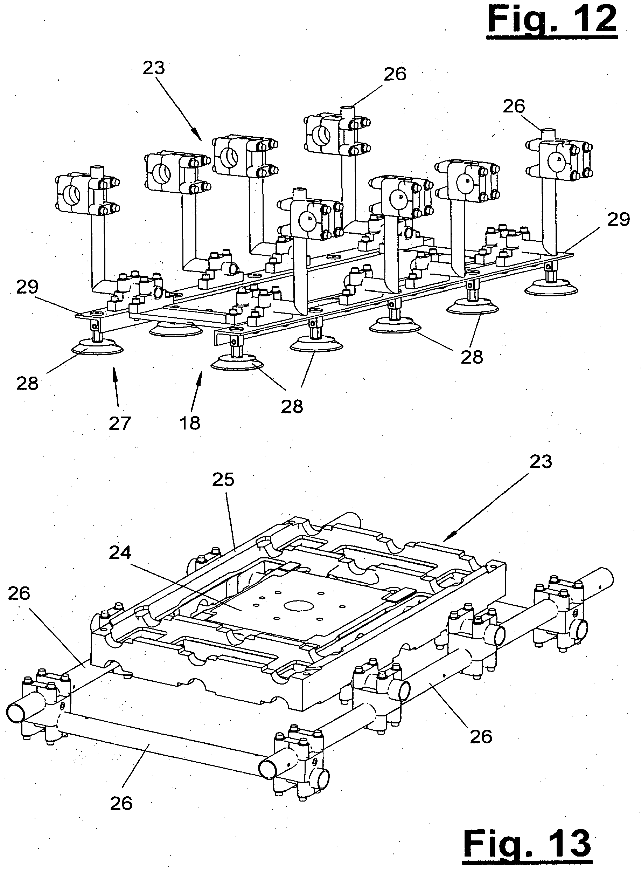

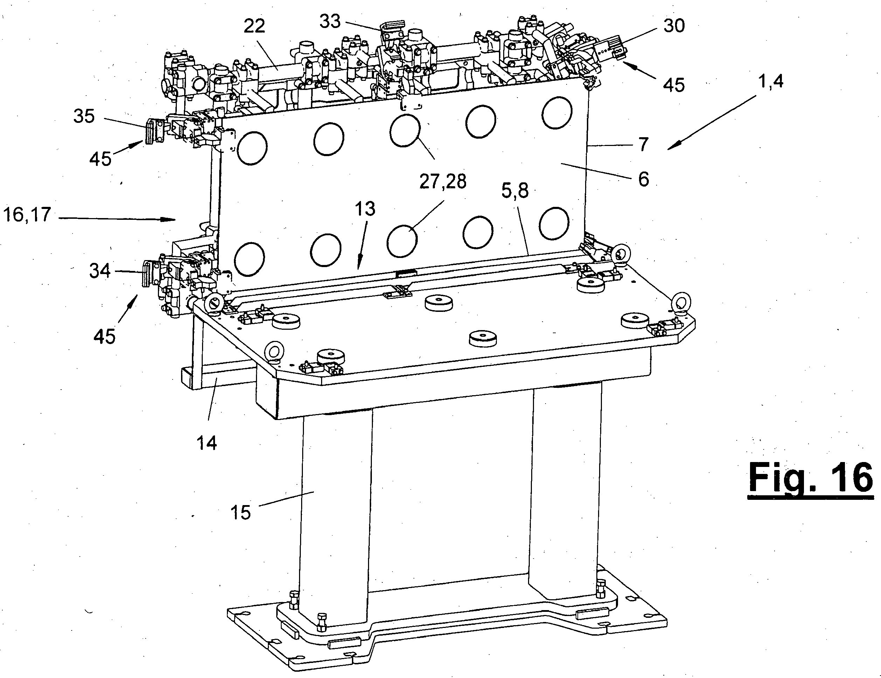

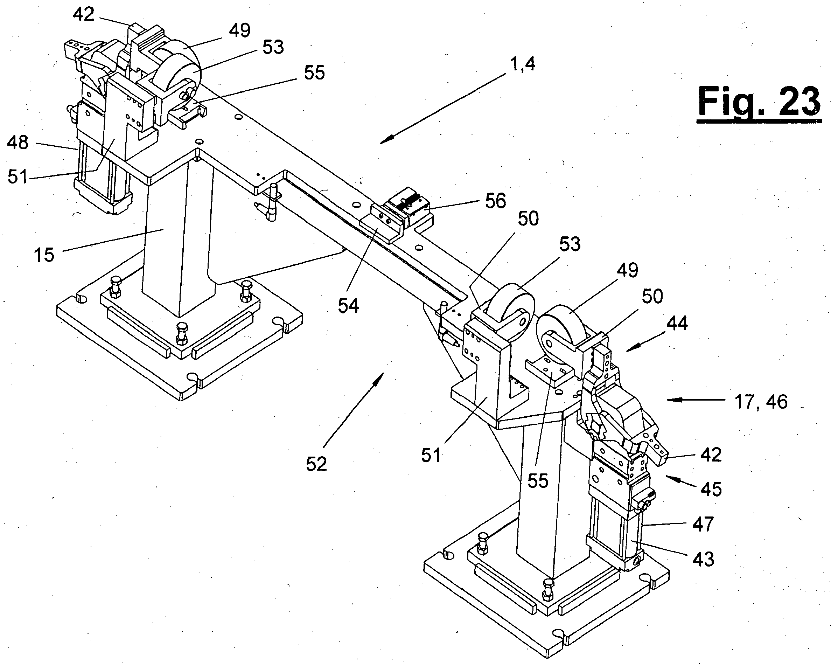

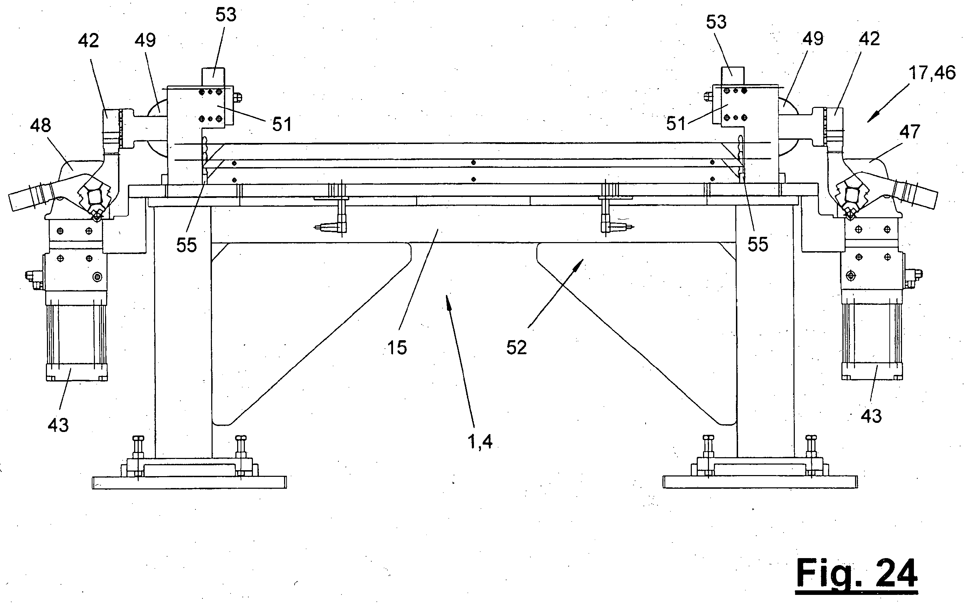

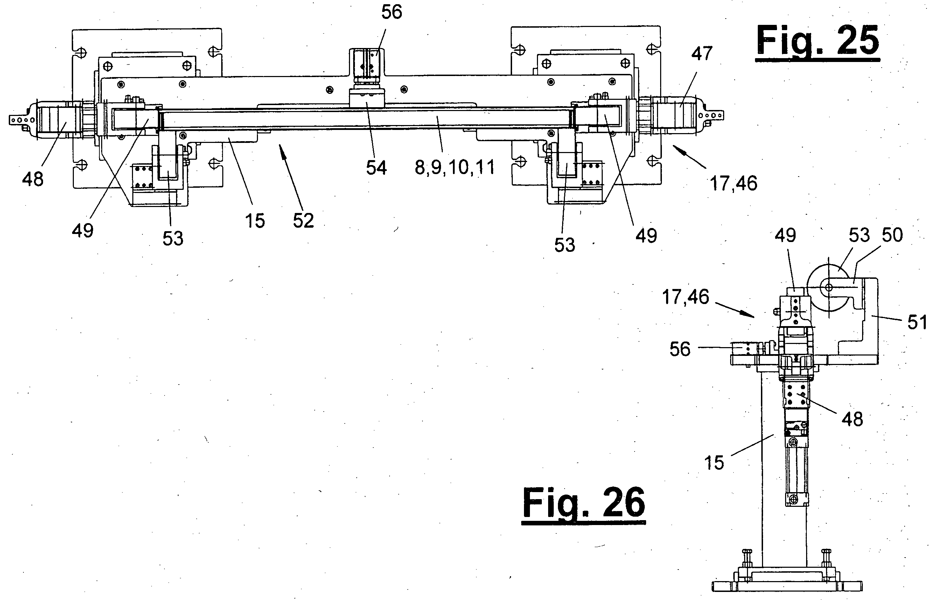

Im gezeigten Ausführungsbeispiel weist die Fügeeinrichtung (4) ein mit dem Manipulator (2) verbindbares Fügewerkzeug (22) und einen Fügehalter (15) auf, der z.B. als stationärer Fügetisch ausgebildet sein kann. In Figur 1 bis 22 und Figur 23 bis 26 sind zwei Varianten eines tischartigen Fügehalters (15) dargestellt. In der Ausführungsform von Figur 23 bis 26 sind außerdem Teile des Fügewerkzeugs (22) am Fügehalter (15) angeordnet.

Der Manipulator (2) kann von beliebig geeigneter Bauart sein und beliebig viele Achsen in beliebiger Ausbildung haben. Im gezeigten Ausführungsbeispiel kommt ein Gelenkarmroboter zum Einsatz, der mindestens sechs rotatorische Achsen aufweist und am vorderen Ende des Arms oder Auslegers eine Roboterhand (3) mit mehreren Achsen, z.B. zwei oder drei Drehachsen, besitzt. Der Roboter (2) kann ein oder mehrere Zusatzachsen, z.B. lineare oder rotatorische Achsen aufweisen. Ferner kann der Manipulator (2) in anderen Ausführungsbeispielen Linearachsen und auch eine Kombination von translatorischen und rotatorischen Achsen besitzen.

Das Verfahren zum Verbinden der Scheibe (6) mit dem Rahmen (5) sieht vor, dass mit dem Manipulator (2) mehrere einzelne Rahmenteile (8,9,10,11) aufgenommen und am Scheibenrand (7) unter Bildung des Rahmens (5) gefügt werden. In der bevorzugten kinematischen Variante führt der Manipulator (2) die Scheibe (6) und steckt sie in bereit gestellte Rahmenteile (8,9,10,11) ein, die zugleich oder anschließend an den Scheibenrand (7) angepresst werden. Die Rahmenteile (8,9,10,11) können von einer am Manipulator (2) und/oder an mindestens einem Fügehalter (15) befindlichen Spanneinrichtung (46) angepresst werden.

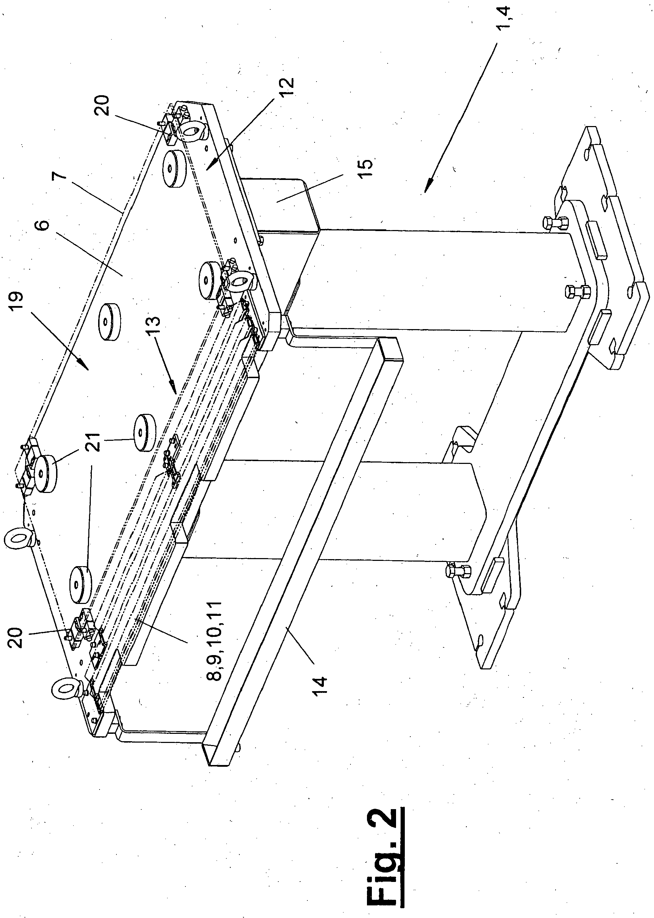

Die Rahmungseinrichtung (1) weist eine Bereitstellung (12) für ein oder mehrere Scheiben (6) auf. Dies kann z.B. die in Figur 2 dargestellte Scheibenablage (19) auf der im wesentlichen horizontalen Platte des Fügetischs (15) sein. An der Bereitstellung (12) werden ein oder mehrere Scheiben (6) in vorgegebener und dem Manipulator (2) und seiner Steuerung bekannter Position bereit gestellt. Hierfür kann eine Positioniereinrichtung (20) an der Scheibenablage (19) vorhanden sein, die beispielsweise aus mehreren Eckanschlägen besteht und zur genauen Positionierung von ein oder mehreren Scheiben (6) dient. Die Scheiben (6) können plan auf der vorzugsweise ebenen Tischplatte liegen. In der gezeigten Ausführungsform sind sie von der Tischplatte durch mehrere gleichmäßig verteilte Stützelemente (21) distanziert, was ein Untergreifen der Scheibe (6) an ihren Rändern (7) ermöglicht.

Die Rahmungseinrichtung (1) kann ferner eine Bereitstellung (13) für ein oder mehrere Rahmenteile (8,9,10,11) aufweisen. Auch hier kann eine Positioniereinrichtung (20) für die Rahmenteile (8,9,10,11) vorhanden sein, um diese in einer vorgegebenen und dem Manipulator (2) und seiner Steuerung bekannten Position zu halten. Die Zuführung der Scheiben (6) und der Rahmenteile (8,9,10,11) kann in beliebig geeigneter Weise erfolgen, z.B. manuell oder durch einen weiteren Handlingroboter oder eine sonstige Zuführeinrichtung. Die Rahmenteile (8,9,10,11) können beispielsweise aus einer Bauteilzuführung mit einer Rutsche oder dgl. angeliefert werden. Der Fügehalter (15) kann bei einer solchen Variante am Ende der Rutsche angeordnet sein. Bei Einsatz von mehreren Rutschen können mehrere Fügehalter (15) vorgesehen sein, die vom Manipulator (2) nacheinander angefahren werden. In der gezeigten Ausführungsform sind die Bereitstellungen (12,13) für alle zum Fügen erforderlichen Bauteile (6,8,9,10,11) gemeinsam an einem Fügetisch (15) angeordnet. In Abwandlung der gezeigten Ausführungsform kann generell der Fügehalter (15) mehrteilig und an verschiedenen Orten verteilt angeordnet sein.

In einer anderen, nicht dargestellten Ausführungsform kann die Bereitstellung (12) vom Fügehalter oder Fügetisch (15) getrennt angeordnet und in anderer Weise ausgebildet sein. Die Bereitstellung kann z.B. ein Förderer sein, der die Scheiben (6) zuführt und in einer bekannten Position bereit stellt. In einer weiteren Abwandlung können die Scheiben (6) in magazinierter Form mit einem Gestell oder Rack zugeführt und bereit gestellt werden. Daneben sind beliebige andere Ausführungsformen einer Bereitstellung (12) möglich. Auch für die Bereitstellung (13) der Rahmenteile (8,9,10,11) sind Abwandlungen möglich. Die Bereitstellung (13) kann getrennt vom Fügehalter (15) angeordnet sein und ebenfalls aus einem Förderer, einem Rahmenteilmagazin oder dgl. bestehen.

Der Rahmen (5) wird im gezeigten Ausführungsbeispiel an den umlaufenden Außenrand (7) der Scheibe (6) gefügt und hat eine dem Scheibenumriss entsprechende Form. Die Rahmenform kann mit der Scheibenform variieren. Sie kann am Scheibenrand (7) umlaufend geschlossen oder stellenweise offen oder unterbrochen sein. Im gezeigten Ausführungsbeispiel besteht der geschlossene Rahmen (5) aus zwei längeren geraden Rahmenteilen (8,9) und zwei kürzeren und geraden Rahmenteilen (10,11). Die Rahmenteile werden an den Ecken miteinander verbunden und können hier einen Gehrungsschnitt aufweisen.

Die Rahmenteile (8,9,10,11) können eine beliebige Querschnittsform haben, die z.B. im wesentlichen oder zumindest bereichsweise U-förmig ist. Sie bestehen beispielsweise aus einem Hohlprofil, in welchem ein winkelförmiger Eckverbinder (nicht dargestellt) eingesteckt werden kann. Ferner kann mindestens eine Aufnahmenut für die Scheibe (6) vorhanden sein. Über die Aufnahmenut kann der Rahmen (5) die Scheibe (6) an drei Seiten umgreifen und ggf. umlaufend einfassen.

Zum Fügen werden beispielsweise die Rahmenteile (8,9,10,11) mit dieser Aufnahmenut auf die Scheibenränder (7) gesteckt und gegebenenfalls angepresst. Die Scheibenränder können mit einer Dichtungsschicht und/oder eine Klebeschicht versehen sein, die vor dem Fügen aktiviert wird. Das Fügen und Anpressen kann in einem Arbeitsschritt erfolgen, wobei die Rahmenteile (8,9,10,11) auf die Scheibenränder (7) aufgesteckt und gleich angepresst werden. Das Fügen und Anpressen kann alternativ in getrennten und aufeinander folgenden Arbeitsschritten geschehen, indem zunächst die Rahmenteile (8,9,10,11) mit Spiel auf die Scheibenränder (7) gesteckt und anschließend unter Schließen der Gehrungsverbindung in den Ecken und Einpressen der dortigen Eckwinkel an die Scheibenränder (7) angedrückt werden.

Für die vorher erwähnte Scheibenvorbereitung kann eine beispielsweise mit dem Fügetisch (15) verbundene Einrichtung (14) zur Prozessvorbereitung vorhanden sein. Dies kann beispielsweise eine Befeuchtungseinrichtung für die Scheibenränder und die dortige Dicht- oder Klebebeschichtung sein. Die Befeuchtungseinrichtung (14) besteht beispielsweise aus einer am Tischrand vertikal nach unten versetzt angeordneten Wanne für eine Befeuchtungsflüssigkeit, die sich im wesentlichen unterhalb einer langen Tischkante und parallel zu dieser befindet. Die Befeuchtungseinrichtung (14) kann mit einer Speiseeinrichtung zum Nachfüllen und zur Füllstandskontrolle ausgerüstet sein.

Das eingangs erwähnte Fügewerkzeug (22) ist mit dem Manipulator (2) und dessen Manipulator- oder Roboterhand (3) beispielsweise lösbar über eine Wechselkupplung oder dgl. verbunden. Die Kräfte und Bewegungen zum Fügen und Anpressen können vom Manipulator (2) aufgebracht werden. Als Gegenlager oder Gegenhalter kann hierfür der Fügehalter (15) oder Fügetisch dienen. Die Presskräfte können alternativ auf andere Weise, z.B. durch eine am Fügewerkzeug (22) oder an anderer Stelle, z.B. am Fügehalter (15), angeordnete Spanneinrichtung (46) aufgebracht werden.

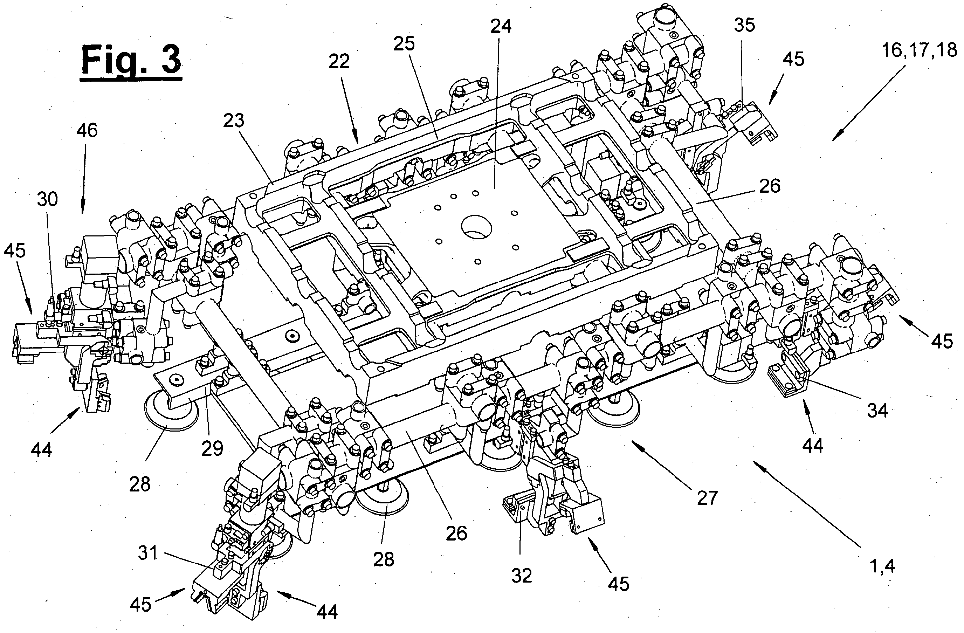

Das in Figur 3 bis 5 dargestellte Fügewerkzeug (22) besitzt ein Gestell (23) mit einem Anschluss (24) zur lösbaren Verbindung mit der Roboterhand (3). Das Gestell (23) kann in beliebig geeigneter Weise ausgebildet sein. Im gezeigten Ausführungsbeispiel handelt es sich um ein kombiniertes Rahmen- und Stangengestell, welches entsprechend der WO 2005/028167 A1 ausgebildet sein kann. Es besteht aus einem Gestellrahmen (25) mit dem innenliegenden Anschluss (24) und randseitigen Stegen mit Aufnahmeöffnungen für rohrförmige Gestellarme (26) mit beispielsweise zylindrischer Form. Die Gestellarme (26) können untereinander durch Kreuzknoten mit Klemmeinrichtungen oder dgl. verbunden sein. Die Gestellarme (26) können sich in unterschiedlichen Richtungen längs und quer oder schräg zur Scheibenhauptebene erstrecken. Das Gestell (23) kann alternativ als Schweißkonstruktion oder als Gussteil ausgebildet sein.

Das Fügewerkzeug (22) kann eine steuerbare Greifeinrichtung (27) zum Halten der ein oder mehreren Scheibe(n) (6) aufweisen. Die Greifeinrichtung (27) ist in Figur 3 bis 5 und 12 dargestellt. Sie weist mehrere am Gestell (23) angeordnete Sauggreifer (28) auf, die mit einer geeigneten Saugquelle (nicht dargestellt) verbunden sind. Die Sauggreifer (28) sind gleichmäßig über die Scheibenfläche verteilt angeordnet und befinden sich an ein oder mehreren Trageinrichtungen (29), die ihrerseits mit dem Gestell (23) verbunden sind. Die Verbindung kann fest oder lösbar sein. Zur Anpassung an unterschiedliche Arten, Größen und Formen von Scheiben kann die Greifeinrichtung (27) verstellbar sein und beispielsweise manuell oder motorisch angetriebene Verstelleinrichtungen für die Sauggreifer (28) aufweisen.

Die Sauggreifer (28) befinden sich vorzugsweise allesamt in einer gemeinsamen Wirkebene. Sie können flexible Saugteller und innenseitige feste Anschläge (nicht dargestellt) aufweisen. Hierdurch können Sie Bestandteil der eingangs erwähnten Planiereinrichtung (18) sein. Wenn eine Scheibe (6) einen Verzug aufweist und z.B. eine von der Sollform abweichende Wölbung aufweist, kann sie mit der Planiereinrichtung (18) wieder eben ausgerichtet werden. Hierzu wird das Fügewerkzeuge (22) mit den Sauggreifern (28) und deren Anschlägen gegen die auf den Stützelementen (21) aufliegende Scheibe (6) gedrückt. Die Stützelemente (21) und die Sauggreifer (28) befinden sich in einer Position entsprechend der Soll-Lage der Scheibe (6) und drücken im Zusammenwirken bei der Fügewerkzeugzustellung die Scheibe (6) in ihre Soll-Form. In dieser Lage werden die Sauggreifer (28) aktiviert und halten die Scheibe (6) in der Soll-Form fest. Durch die Beseitigung des Verzugs haben die Scheibenränder (7) auch ihre Soll-Position für den nachfolgend beschriebenen Fügevorgang. Wenn die Scheibe (6) eine von der Plattenform abweichende Gestalt hat, sind die Stützelemente (21) und die Sauggreifer (28) entsprechend an diese Gestalt und die hierdurch vorgegebene Soll-Lage angepasst und angeordnet.

Das Fügewerkzeug (22) weist in der einen Ausführungsform von Figur 1 bis 22 eine steuerbare Spanneinrichtung (46) auf, die einerseits zum Abstützen und Führen der Scheibe (6) beim Fügen dienen kann. Die Spanneinrichtung (46) dient hierbei als Gegenhalter zum Abstützen der Scheibe (6) gegen die Füge- und Anpressbewegung entsprechend des nachfolgend erläuterten Ausführungsbeispiels. Die Spanneinrichtung (46) ist dabei ein Bestandteil der Vorfügeeinrichtung (16).

Die Spanneinrichtung (46) kann alternativ oder zusätzlich zum Aufbringen der Presskräfte dienen, wenn z.B. die Rahmenteile (8,9,10,11) zuvor lose oder mit Spiel und mit relativ wenig Steckkraft an die Scheibenränder (7) gefügt worden sind. Sie ist dabei ein Bestandteil der Presseinrichtung (17).

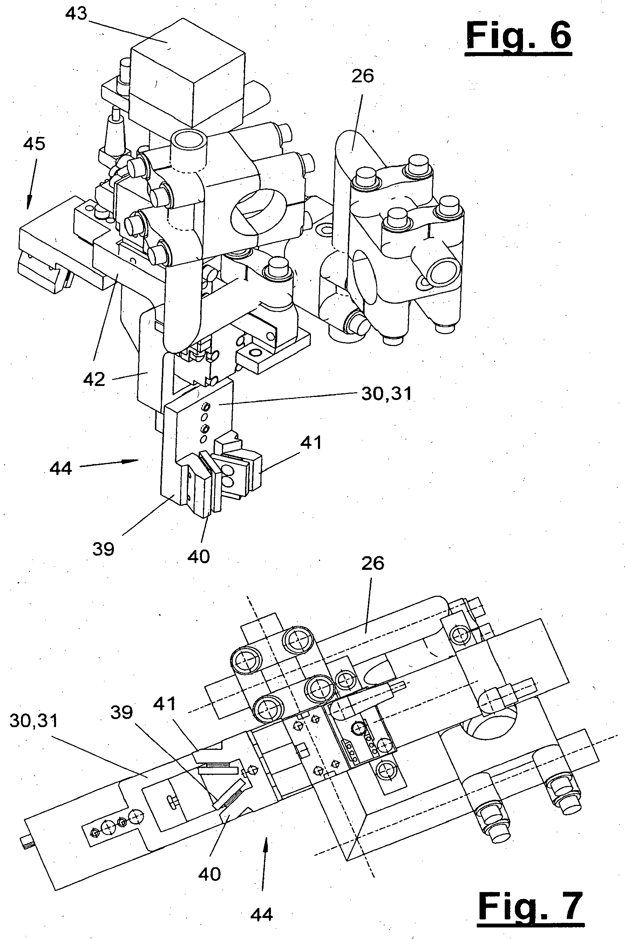

Die Spanneinrichtung (46) weist im gezeigten Ausführungsbeispiel von Figur 1 bis 22 mehrere steuerbare und zustellbare Spanner (30,31,32,33,34,35) für die Scheibe (6) und/oder die Rahmenteile (8,9,10,11) auf, die z.B. in drei Gruppen angeordnet und in drei Varianten ausgebildet sind. Figur 6 bis 11 zeigen diese Ausbildungen im einzelnen. Die Spanneranordnung am Gestell (23) ist aus Figur 3 bis 5 ersichtlich. Die Spanner (30,311,32,33,34,35) sind fest oder verstellbar am Gestell (23) angeordnet. Sie können insbesondere bei Bedarf und in Anpassung an unterschiedliche Scheiben und Rahmenformen manuell oder maschinell verstellt werden. Die Verstellung kann bei Anordnung entsprechender Stelltriebe vollautomatisch erfolgen. Die Spanner (30,31,32,33,34,35) sind beispielsweise über Kreuzschellen und Klemmeinrichtungen mit den Gestellarmen (26) verbunden.

Die Spanneinrichtung (46) weist beispielsweise zwei oder mehr Eckspanner (30,31) an benachbarten Eckbereichen der Scheibe (6) auf. Diese sind an einer der schmalen Rahmen- oder Scheibenseiten angeordnet und weisen Anschläge (39) auf, welche an die freien Enden der langen Rahmenteile (8,9) angepasst sind. Figur 6 und 7 zeigen diese Anordnung in perspektivischer Ansicht und Draufsicht. Die Anschläge (39) sind als Winkelanschläge ausgebildet und besitzen zwei Anschlagelemente (40,41), die beispielsweise einen 45° Winkel miteinander einschließen und an den Gehrungsschnitt am Rahmenteilende angepasst sind. Das Rahmenteil (8,9) liegt mit einer Langseite und der schrägen Gehrungsseite formschlüssig an den Anschlagelementen (40,41) an, die entsprechend der Profilabmessungen mittels Shims oder dgl. ausgerichtet und positioniert sind. Diese Winkelanschläge (39) können axial auf die langen Rahmenteile (8,9) einwirkende Kräfte abstützen.

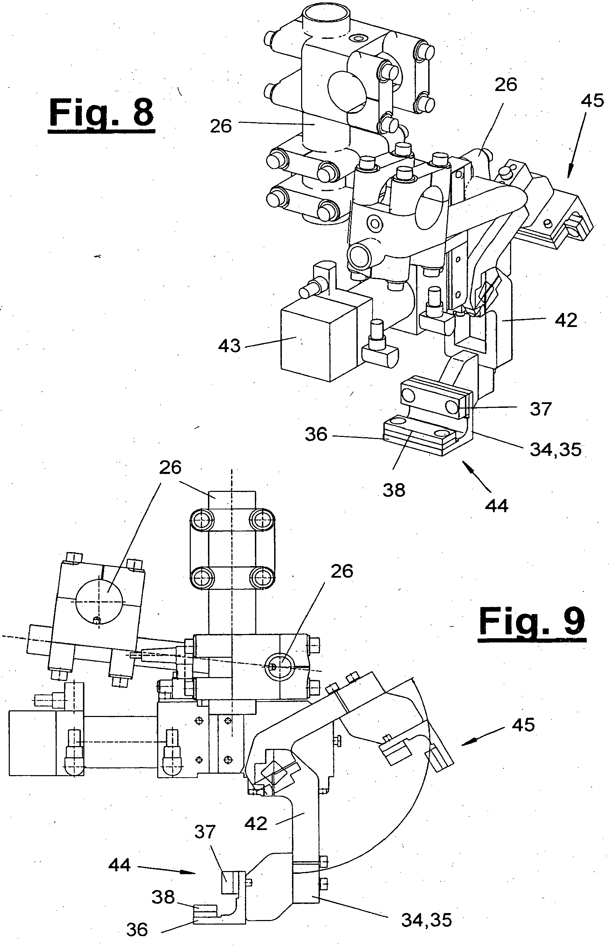

Figur 8 und 9 verdeutlichen andere Spanner, die als Endspanner (34,35) ausgebildet und an der gegenüberliegenden Schmalseite des Rahmens (5) angeordnet sind. Sie wirken auf das dortige kurze Rahmenteil (10) ein und sind an dessen Außenkontur angepasst. Die Endspanner (34,35) weisen Anschläge (36) auf, welche mit seitlichen und unteren Anschlagelementen (37,38) das Rahmenteil (10) formschlüssig seitlich und unten umgreifen und abstützen. Auch hier ist eine Anpassung der Anschlagelemente (37,38) in Form und Ausrichtung mittels Shims und dergl. vorhanden.

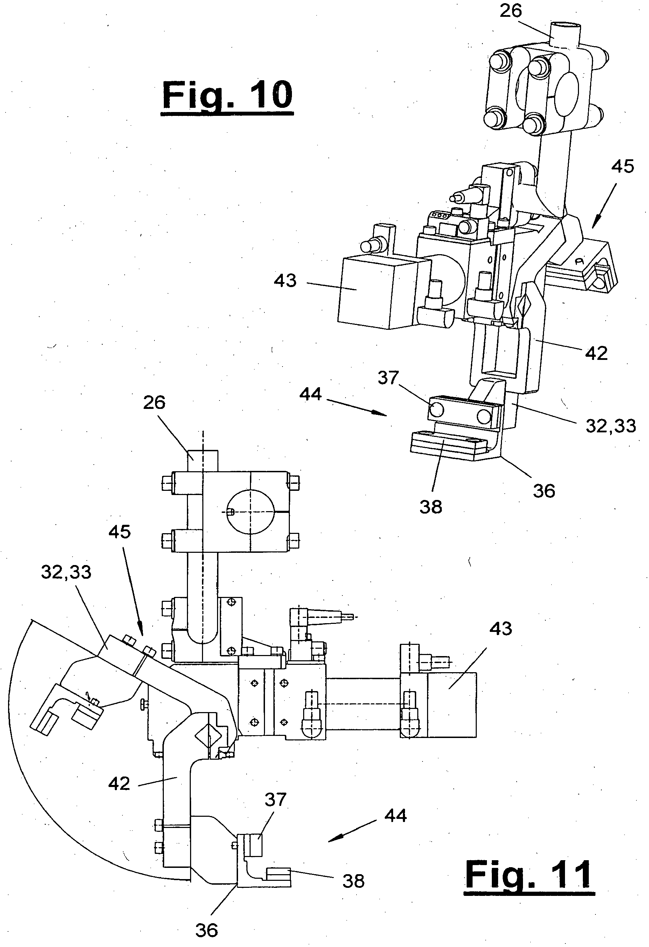

Figur 10 und 11 zeigen die dritte Variante der Seitenspanner (32,33), die an den Längsseiten der Scheibe (6) und des Rahmens (5) angeordnet sind und die ähnlich wie die Endspanner (34,35) ausgebildet sind. Sie umgreifen mit ihren Anschlägen (36) formschlüssig die längeren Rahmenteile (8,9) seitlich und unten. Die Seitenspanner (32,33) können ein seitliches Ausknicken der schlanken Rahmenteile (8,9) bei Einwirkung von Axialkräften verhindern.

Die Spanner (30,31,32,33,34,35) weisen in den verschiedenen Varianten jeweils einen beweglichen Spannerarm (42) auf, der beispielsweise schwenkbar zwischen einer Spannstellung (44) am Rahmen (5) und einer zurückgezogenen Ruhestellung (45) mittels eines steuerbaren Antriebs (43) hin und her bewegt werden kann. Der Untergriff der Anschläge (36) und der Anschlagelemente (38) erfolgt auf der der Greifeinrichtung (27) gegenüberliegenden Scheibenseite. Die Scheibe (6) wird dadurch allseitig umgriffen und formschlüssig geführt.

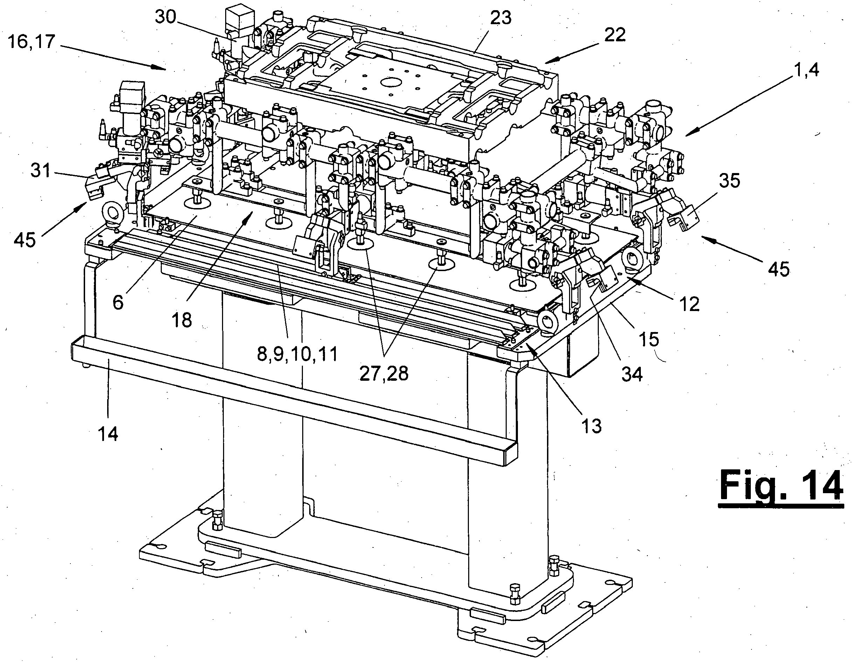

Figur 14 bis 22 verdeutlichen beispielhaft einen mehrstufigen Prozessablauf beim Fügen der Rahmenteile (8,9,10,11) an eine Scheibe (6). Der Manipulator (2) ist in den Zeichnungen der Übersicht halber nicht dargestellt.

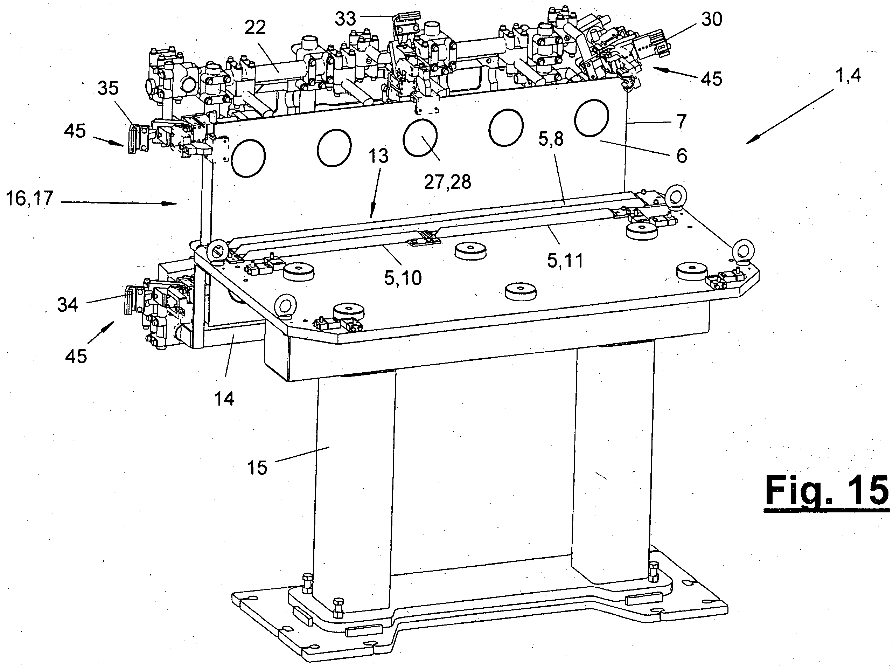

In der Ausgangsposition von Figur 14 wird das Fügewerkzeug (22) plan auf die an der Scheibenauflage (19) bereit liegende Scheibe (6) gedrückt, wobei mittels der Planiereinrichtung (18) in der vorerwähnten Weise Verzüge in der Scheibe (6) beseitigt werden können. Der Manipulator (2) dreht anschließend das Fügewerkzeug (22) mit der von der Greifeinrichtung (27) aufgenommenen Scheibe (6). Die Spanneinrichtung (46) bzw. die Spanner (30,31,32,33,34,35) können hierbei geöffnet und in die Ruhestellung (45) zurückgeschwenkt sein. Der Manipulator (2) taucht dann die Scheibe (6) mit ihrer einen Längskante in die Befeuchtungseinrichtung (14). Figur 15 zeigt diesen Prozessschritt.

Anschließend wird die Scheibe (6) in das bereitliegende lange Rahmenteil (8) positionsgenau eingesteckt. Der Manipulator (2) führt dabei die Scheibe (6) entsprechend und presst sie mit dem Rand (7) in die Aufnahmenut des Rahmenteils (8). Die Rahmenteile (8,9,10,11) liegen nebeneinander mit den Aufnahmenuten nach oben in der Bereitstellung (13) und sind hier genau positioniert.

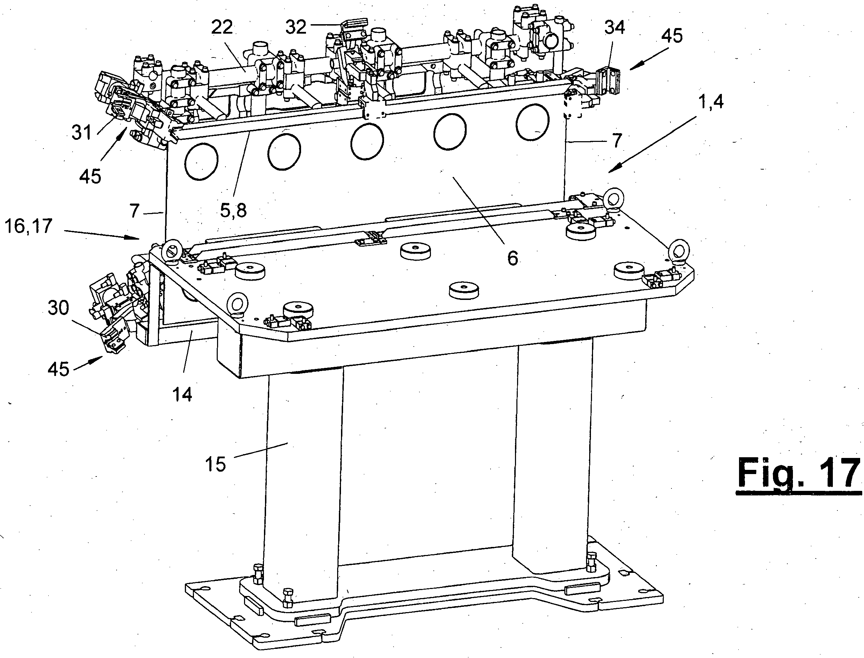

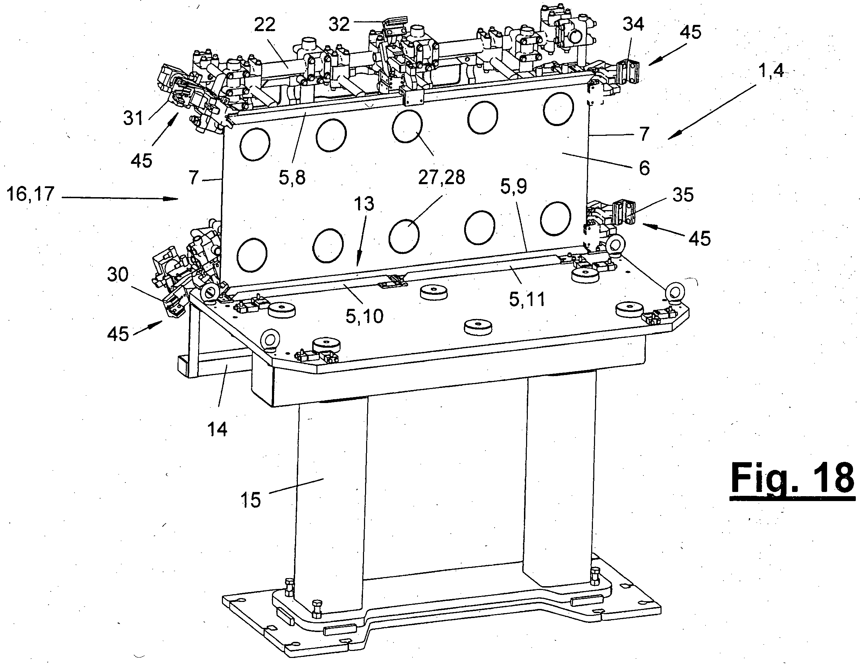

Im nächsten Schritt gemäß Figur 17 dreht der Manipulator (2) die Scheibe (6) um 180° und taucht sie mit der anderen Längsseite in die Befeuchtungseinrichtung (14). Im nächsten Schritt gemäß Figur 18 wird die Scheibe (6) angehoben und mit gleicher vertikaler Ausrichtung seitlich versetzt von oben in das zweite bereitliegende lange Rahmenteil (9) gesteckt und eingepresst.

Bei diesen Füge- und Pressvorgängen können die Spanner (30,31,32 bis 35) geöffnet sein. Die zum Fügen notwendigen Kräfte und Bewegungen können vom Manipulator (2) über die Greifeinrichtung (27) übertragen werden. Die Rahmenteile (8,9) sind in der Bereitstellung (13) lose gehalten und z.B. über Führungsschuhe oder dergl. exakt positioniert. Beim Anheben der eingesteckten Scheibe (6) können sie mitgenommen werden.

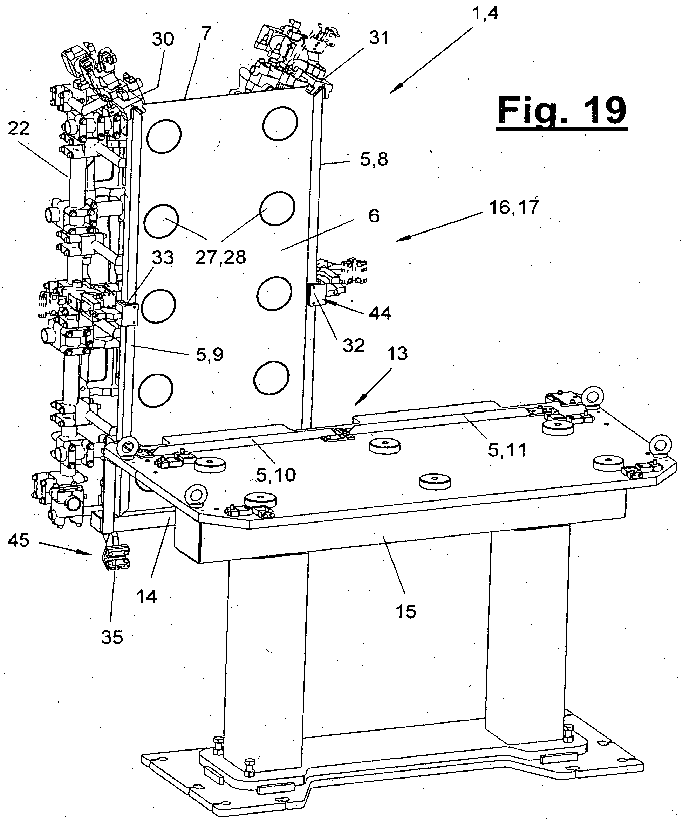

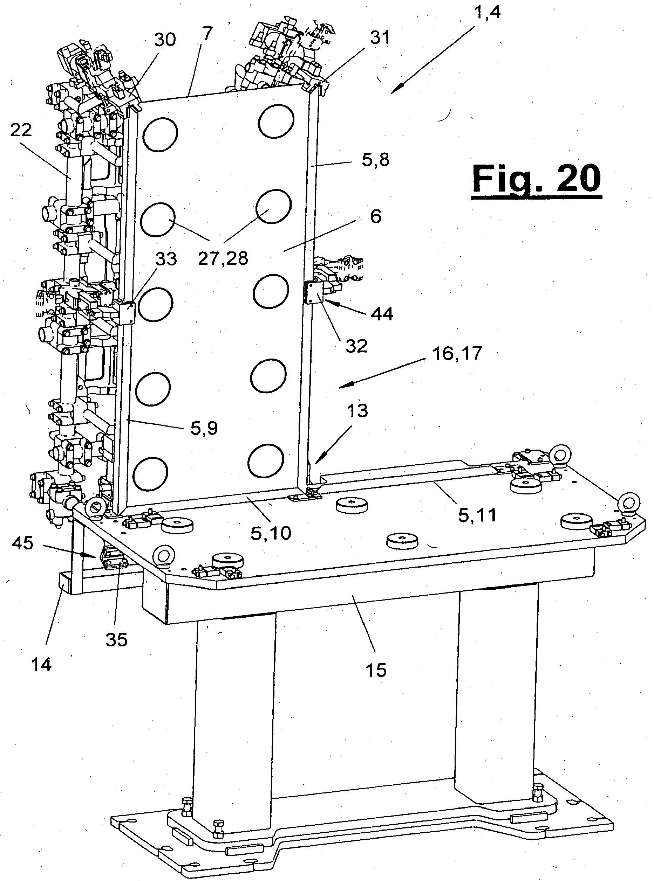

Für den nächsten Schritt gemäß Figur 19 wird die Scheibe (6) um 90° um die Querachse gedreht, wobei die Eckspanner (30,31) am oberen Scheibenende liegen. Die Scheibe (6) wird dann mit ihrem unteren freien Rand (7) und geöffneten Endspannern (34,35) in die Befeuchtungseinrichtung (14) eingeführt. Entsprechend ihrer Schmalform kann sie dabei außermittig versetzt und gleich gegenüber dem ersten kurzen Rahmenteil (10) positioniert werden. Im nächsten Schritt gemäß Figur 20 wird die Scheibe (6) vertikal in das kurze Rahmenteil (10) eingeführt und eingepresst. Zuvor schließen die Eckspanner (30,31) und die Seitenspanner (32,33) und halten die gefügten langen Rahmenteile (8,9) fest. Die evtl. vorhandenen Eckverbinder können in die freien Enden des kurzen Rahmenteils (10) eingesteckt sein und mit ihren freien Schenkeln nach oben ragen, wobei sie bei der Fügebewegung in die Aufnahmekammern an den langen Rahmenteilen (8,9) eintauchen. Durch die Eck- und Seitenspanner (30,31,32,33) werden hierbei die Fügekräfte übertragen und die Rahmeteile (8,9) exakt in der Fügeposition gehalten und geführt.

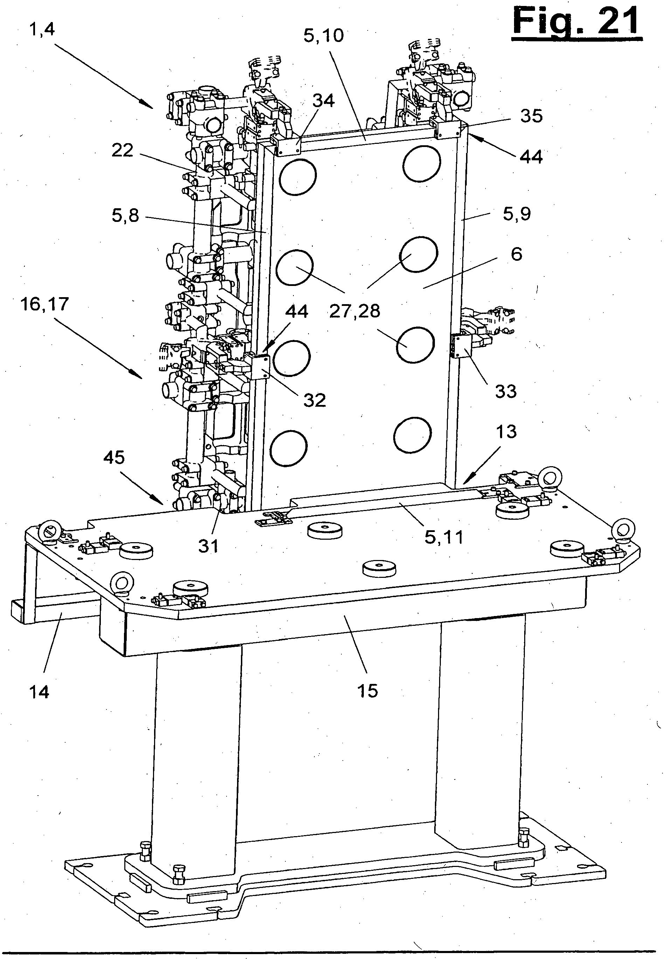

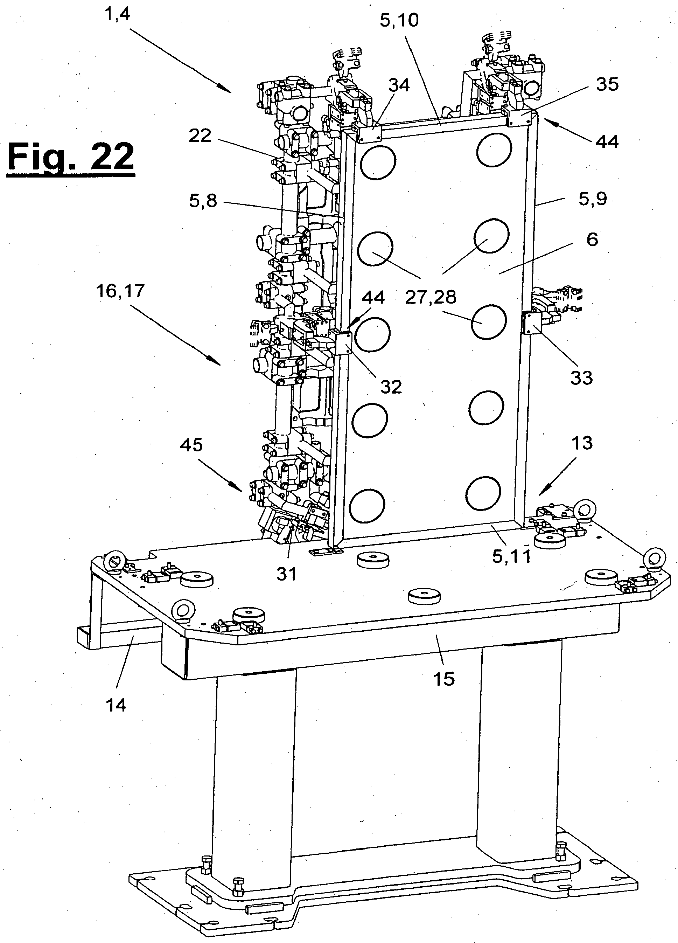

In den beiden letzten Schritten gemäß Figur 21 und 22 wird die Scheibe (6) erneut um 180° um die Querachse gedreht und nun mit ihrer letzten freien Kante (7) in die Befeuchtungseinrichtung (14) eingeführt. Die Eckspanner (30,31) sind hierbei geöffnet. Anschließend wird die Scheibe (6) auf das letzte kurze Rahmenteil (11) gesteckt und angepresst, wobei auch hier die Eckverbindung geschlossen wird. Über die in Spannstellung (44) eingeschwenkten End- und Seitenspanner (32,33,34,35) werden auch diesmal Fügekräfte und Fügebewegungen sowie die bereits gefügten Rahmenteile (8,9,10) in ihrer Lage gesichert. Der Manipulator (2) gibt die Scheibe (6) mit dem Rahmen (5) an eine Ablage, einen Förderer oder dgl. und nimmt die nächste Scheibe (6) auf, wobei der Zyklus wieder mit dem ersten Schritt gemäß Figur 14 beginnt.

Figur 23 bis 26 zeigen eine Variante der Fügeeinrichtung (4) und des Fügehalters (15). Die Bereitstellungen (12,13) können extern angeordnet sein und sind hier nicht dargestellt. Der Manipulator (2) und sein Fügewerkzeug (22) können gleich oder ähnlich wie im ersten Ausführungsbeispiel von Figur 1 bis 22 ausgebildet sein. Die Spanneinrichtung (46) am Fügewerkzeug (22) kann verkleinert sein und weniger Spanner (30 - 35) aufweisen, wobei einige Bereiche an den Rahmenteilen oder -profilen (8,9,10,11) frei liegen und von außen zugänglich und kontaktierbar sind.

Der Fügehalter (15) ist hier als schmaler und brückenartiger Fügetisch ausgebildet, der als Gegenhalter zum Führen und Abstützen der Rahmenteile (8,9,10,11) beim Anpressen an den Scheibenrand (7) dienen kann. Der Fügehalter (15) kann außerdem eine Führungseinrichtung (52) für die hier nicht dargestellte Scheibe (6) und für die ein oder mehrere vorgefügte Rahmenteile (8,9,10,11) besitzen. Ferner kann der Fügehalter (15) eine Spanneinrichtung (46) aufweisen und ein Bestandteil der Presseinrichtung (17) bzw. des Fügewerkzeugs (22) sein.

Der Fügetisch (15) weist eine schmale und im mittleren Bereich ausgesparte Tischplatte auf, die als Auflage und Abstützung für die Scheibe (6) und ein Rahmenteil (8,9,10,11) dient. Die Führungseinrichtung (52) weist ein oder mehrere Führungselemente (55) zum Führen des vorgefügten Rahmenteils (8,9,10,11) auf der Tischplatte auf. Dies können z.B. U-förmige Führungsschuhe (55) sein, die den oder die Rahmenteile (8,9,10,11) am Rand- oder Eckbereich mehrseitig umfassen und führen und die außerdem Einweisschrägen für die genaue Rahmenpositionierung haben können.

Die Führungseinrichtung (52) kann ferner ein oder mehrere weitere Führungselemente (53) besitzen, die z.B. als frei drehbare Rollen ausgebildet sind, die über Rollenträger (50) an tischfesten Konsolen (51) gehalten sind. Die Rollen (53) befinden sich oberhalb der Führungsschuhe (55) und dienen als Seitenanschlag und Führung für die hochstehenden Scheibenränder oder Rahmenteile (8,9,10,11). An den frei drehbaren Rollen (53) können die Scheibe (6) und ggf. die Rahmenteile beim robotergeführten Einsetzen in die Führungsschuhe (55) entlanggleiten.

Neben den Rollen (53) kann jeweils eine weitere und quer dazu ausgerichtete Rolle (49) als Anschlag oder Einweiser angeordnet sein, die sich ebenfalls über dem zugehörigen Führungsschuh (55) befindet und eine Scheiben- und Rahmenführung nach der anderen Seite bietet. Die Rollen (49) wirken von gegenüberliegenden Seiten auf die Scheibe (6) bzw. die Rahmenteile ein und können Bestandteil der nachfolgend erläuterten Spanneinrichtung (46) sein. Alternativ können sie ähnlich wie die Rolle (53) an einer tischfesten Konsole (51) angeordnet sein. Die Rollen (49,53) befinden sich mit Abstand oberhalb der Führungsschuhe (55).

Die Führungseinrichtung (52) kann ferner ein seitlich einwirkendes Führungselement (54) aufweisen, welches z.B. im Bereich des Tischausschnitts angeordnet und als Anschlag (54) ausgebildet ist. Der Anschlag (54) kann als Winkelblech ausgebildet sein und stationär oder beweglich angeordnet sein. Im gezeigten Ausführungsbeispiel ist eine Zustelleinrichtung (56) vorgesehen, die z.B. einen pneumatischen Zylinder aufweist und den Anschlag (54) etwa mittig gegen den unteren Scheibenrand bzw. das dortige Rahmenteil drückt, wobei das seitliche Spiel in den Führungsschuhen (55) aufgenommen und die Scheiben- und Rahmenlage definiert wird.

Die beidseitigen Rollen (49) können in der vorstehend angedeuteten Weise Bestandteil einer Spanneinrichtung (46) sein. Hierzu sind die Rollenträger (50) mit einem Spanner (47,48) verbunden, der die Rolle (49) an die hochstehenden Rahmenteile (8,9,10,11) andrückt und diese an den Scheibenrand (7) presst. In der gezeigten Ausführungsform weisen die Spanner (47,48) jeweils einen Antrieb (43) und einen beweglichen, insbesondere schwenkbaren Spannerarm (42) auf, an dem der Rollenträger (50) befestigt ist. Die Rollen (49) werden dabei in einer Schwenkbewegung zugestellt und angepresst. In den Zeichnungen sind die Spannstellung (44) mit der Rolle (49) und die Ruhestellung (45) ohne Rolle dargestellt.

Alternativ können die Rollen (49) an einer verschiebbar gelagerten Konsole angeordnet sein, die vom Spanner (47) beaufschlagt und an den Scheibenrand bzw. das Rahmenteil zugestellt wird, ggf. gegen die Kraft einer rückstellenden Feder. Der Spanner (47,48) kann ggf. in einer einseitigen Schleppverbindung auf die zugehörige Rolle (49) einwirken. Er kann wie im gezeigten Ausführungsbeispiel eine Schwenkbewegung oder alternativ eine Schiebebewegung mit entsprechend geänderter Antriebsgestaltung ausführen. Ferner ist es möglich, dass der Spanner (47,48) mit der Rolle (49) eine Zwischenstellung einnimmt, in der die frei drehbare Rolle (49) eine Einweiser- und Führungsfunktion für die Scheibe (6) und deren Rahmenteile (8,9,10,11) hat. Der Presshub wird erst anschließend aufgebracht.

Abwandlungen der gezeigten und beschriebenen Ausführungsformen sind in verschiedener Weise möglich. In einer Variante kann die Kinematik umgedreht sein, wobei der Manipulator (2) die Rahmenteile (8,9,10,11) führt, an den Rand (7) von mindestens einer bereit gestellten Scheibe (6) ansetzt und anpresst. Dies kann mittels einer entsprechend abgeänderten Fügeeinrichtung (4) und eines Fügewerkzeugs (22) geschehen.

Im gezeigten Ausführungsbeispiel von Figur 1 bis 22 sind die Eckverbinder exakt positioniert und haben einen relativ festen Sitz in den Rahmenteilen (8,9,10,11). In einer Variante kann der Sitz der Eckverbinder mehr Spiel haben. In diesem Fall werden die Rahmenteile (8,9,10,11) zunächst in der eingangs beschriebenen Weise nacheinander aufgenommen und auf die Scheibenränder gesteckt, wobei dies mit Spiel und noch ohne Aufbringung von größeren Anpresskräften erfolgt. Die Gehrungs- und Eckverbindungen sind hierdurch auch noch nicht geschlossen. Das Fügen der Rahmenteile (8,9,10,11) kann bei geöffneter Spanneinrichtung (46) erfolgen. Anschließend wird zum Anpressen der Rahmenteile (8,9,10,11) die Spanneinrichtung (46) eingesetzt, wobei die entsprechend angeordneten und verteilten Spanner gleichmäßig auf die Rahmenprofile (8,9,10,11) einwirken und diese an die Scheibenränder anpressen, wobei auch eine Annäherung im Eckbereich und ein Schließen der Gehrungsverbindung erfolgt.

Ferner ist es möglich, ein Fügen von Rahmenteilen und Scheibe auch auf andere Weise als mit durchlaufenden Führungs- oder Aufnahmenuten durchzuführen. Beispielsweise können Steckverbindungen mit Zapfen, Clipsverbindungen oder dgl. erfolgen. Ein Fügen ist auch bei teilweise geöffnetem Rahmen (5) möglich. Ferner kann die Prozessvorbereitung der Scheibe (6) auf andere Weise vorgenommen werden oder auch entfallen. Variabel sind ferner die konstruktive Ausbildung des Fügewerkzeugs (22) und des Fügehalters (15). Die Spanneinrichtung (46) kann anders ausgebildet und angeordnet sein. Gleiches gilt für das Gestell (23).

### BEZUGSZEICHENLISTE

- 1: Rahmungseinrichtung
- 2: Manipulator, Roboter
- 3: Roboterhand
- 4: Fügeeinrichtung
- 5: Rahmen
- 6: scheibenartiger Körper, Scheibe
- 7: Rand, Scheibenrand
- 8: Rahmenteil, lang
- 9: Rahmenteil, lang
- 10: Rahmenteil, kurz
- 11: Rahmenteil, kurz
- 12: Bereitstellung Scheibe
- 13: Bereitstellung Rahmenteile
- 14: Einrichtung zur Prozessvorbereitung der Scheibe
- 15: Fügehalter, Fügetisch
- 16: Vorfügeeinrichtung
- 17: Presseinrichtung
- 18: Planiereinrichtung
- 19: Scheibenablage
- 20: Positioniereinrichtung
- 21: Stützelement, Auflage
- 22: Fügewerkzeug
- 23: Gestell
- 24: Anschluss
- 25: Gestellrahmen
- 26: Gestellarm
- 27: Greifeinrichtung
- 28: Sauggreifer
- 29: Trageinrichtung
- 30: Spanner, Eckspanner, Gegenhalter an Gehrung
- 31: Spanner, Eckspanner, Gegenhalter an Gehrung
- 32: Spanner, Seitenspanner längs
- 33: Spanner, Seitenspanner längs
- 34: Spanner, Endspanner quer
- 35: Spanner, Endspanner quer
- 36: Anschlag
- 37: Anschlagelement seitlich
- 38: Anschlagelement unten
- 39: Anschlag, Winkelanschlag
- 40: Anschlagelement winklig
- 41: Anschlagelement winklig
- 42: Spannerarm
- 43: Antrieb
- 44: Spannstellung
- 45: Ruhestellung
- 46: Spanneinrichtung
- 47: Spanner
- 48: Spanner
- 49: Anschlag, Rolle
- 50: Rollenträger
- 51: Konsole
- 52: Führungseinrichtung
- 53: Führungselement, Rolle
- 54: Führungselement, Anschlag
- 55: Führungselement, Führungsschuh
- 56: Zustelleinrichtung

## Patentansprüche

1. Verfahren zum Verbinden von scheibenartigen Körpern (6) mit einem Rahmen (5) mittels eines Manipulators (2) **dadurch gekennzeichnet, dass** mit dem Manipulator (2) mehrere einzelne Rahmenteile (8,9,10,11) aufgenommen und am Scheibenrand (7) unter Bildung des Rahmens (5) gefügt werden, wobei der scheibenartige Körper (6) vom Manipulator (2) mittels eines Fügewerkzeug (22) und dessen steuerbarer Greifeinrichtung (27) gehalten wird.

2. Verfahren nach Anspruch 1, **dadurch gekennzeichnet, dass** die Rahmenteile (8,9,10,11) mit einer Aufnahmenut auf die Scheibenränder (7) gesteckt und angepresst werden.

3. Verfahren nach Anspruch 1 oder 2, **dadurch gekennzeichnet, dass** der Manipulator (2) den scheibenartigen Körper (6) führt und in bereit gestellte Rahmenteile (8,9,10,11) einsteckt, die zugleich oder anschließend an den Scheibenrand (7) angepresst werden.

4. Verfahren nach Anspruch 1, 2 oder 3, **dadurch gekennzeichnet, dass** die Rahmenteile (8,9,10,11) von einer am Manipulator (2) und/oder an mindestens einem Fügehalter befindlichen Spanneinrichtung (46) angepresst werden.

## Claims

1. Method for connecting pane-like bodies (6) to a frame (5) by means of a manipulator (2), **characterized in that** a plurality of individual frame parts (8, 9, 10, 11) are picked up by the manipulator (2) and are joined at the pane edge (7) to form the frame (5), wherein the pane-like body (6) is held by the manipulator (2) by means of a joining tool (22) and its controllable gripping device (27).

2. Method according to Claim 1, **characterized in that** the frame parts (8, 9, 10, 11) are plugged and pressed by way of a mounting groove onto the pane edges (7).

3. Method according to Claim 1 or 2, **characterized in that** the manipulator (2) guides the pane-like body (6) and inserts it into frame parts (8, 9, 10, 11) which are made available, which frame parts are at the same time or subsequently pressed onto the pane edge (7).

4. Method according to Claim 1, 2 or 3, **characterized in that** the frame parts (8, 9, 10, 11) are pressed on by a clamping device (46) situated on the manipulator (2) and/or on at least one joining holder.

## Revendications

1. Procédé de connexion de corps en forme de panneau (6) à un cadre (5) au moyen d'un manipulateur (2), **caractérisé en ce que** plusieurs parties de cadre (8, 9, 10, 11) individuelles sont reçues avec le manipulateur (2) et sont assemblées au niveau du bord du panneau (7) en formant le cadre (5), le corps en forme de panneau (6) étant retenu par le manipulateur (2) au moyen d'un outil d'assemblage (22) et de son dispositif de préhension commandable (27).

2. Procédé selon la revendication 1, **caractérisé en ce que** les parties de cadre (8, 9, 10, 11) sont enfichées et pressées avec une rainure de réception sur les bords du panneau (7).

3. Procédé selon la revendication 1 ou 2, **caractérisé en ce que** le manipulateur (2) guide le corps en forme de panneau (6) et l'insère dans des parties de cadre fournies (8, 9, 10, 11) qui sont simultanément ou ensuite pressées contre le bord du panneau (7).

4. Procédé selon la revendication 1, 2 ou 3, **caractérisé en ce que** les parties de cadre (8, 9, 10, 11) sont pressées par un dispositif de serrage (46) se trouvant au niveau du manipulateur (2) et/ou au niveau d'au moins un support d'assemblage.
